(19) Europäisches Patentamt / European Patent Office / Office européen des brevets

(11) **EP 2 003 177 A1**

(12) # EUROPEAN PATENT APPLICATION

(43) Date of publication:
**17.12.2008 Bulletin 2008/51**

(21) Application number: **07011688.4**

(22) Date of filing: **14.06.2007**

(51) Int Cl.:
*C09D 201/06* (2006.01)    *C09D 191/00* (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Cytec Surface Specialties Austria GmbH**
**8010 Graz (AT)**

(72) Inventors:
• **Reidlinger, Gerhard, Dr.**
  **8010 Graz (AT)**
• **Billiani, Johann, Dr.**
  **8042 Graz (AT)**
• **Gobec, Michael, Dr.**
  **8010 Graz (AT)**

(74) Representative: **Deckers, Hellmuth Alexander et al**
**European Patent Attorney,**
**Bahnhofstrasse 26/A**
**55218 Ingelheim (DE)**

(54) **Aqueous coating binder composition**

(57) An aqueous coating binder composition comprising a mass fraction of from 2 % to 30 % of a hydroxy-functional oil derivative A and from 70 % to 98 % of a water-dispersible vinyl polymer resin B, where the mass fractions relate to the sum of masses of the binder components A and B, a process for the preparation thereof, and its application in paints and coatings

**EP 2 003 177 A1**

**Description**

The invention relates to an aqueous coating binder composition, a process for its manufacture, and to a method of use thereof for coating of substrates.

Aqueous coating binders based on vinyl polymers have been known for years. They are mostly based on polyvinyl acetate and its copolymers, or on acrylic (co)polymers, as well as copolymers of both systems. They are usually made by an emulsion polymerisation process in water, wherein the monomer is dispersed, and by action of a radical initiator. Selection of kind and amount of monomers used leads to a broad spectrum of properties, ranging from hard to elastic coatings formed therewith on a variety of substrates.

The concept of copolymerisation to modify the properties of the coating film is, however, limited by the copolymerisation parameters, and also by the preferential polymerisation of one or more monomers in a mixture, which may lead to inhomogeneity.

It is also known that the properties of statistical copolymers are commonly an average of the properties of the homopolymers made from the monomers which make up the mixture, where the relationship is, of course, not strictly linear. Block copolymers, on the other hand, retain the properties of both homopolymers formed by the monomers which make up the mixture. The same is true for mixtures, or blends, of polymers, provided that these are sufficiently miscible.

In the preparation of coating compositions, mixing two or more resins frequently leads to opacity in the dried or cured film, and possibly also to phase separation. Properties of coating films made from polymer, or resin, mixtures are therefore hardly predictable.

Paints made from water-borne acrylic resins usually have very good weathering resistance and low yellowing propensity. They suffer, however, from the following drawbacks:

- the gloss does not increase when plasticiser is added
- recoatability is poor (adding a further paint layer leads to surface irregularities)
- the build needs improvement
- the minimum film forming temperature is too high (without plasticiser)
- the coated surface frequently has a structured appearance from brushing
- addition of plasticisers leads to permanently softer films with increased propensity for soiling.

It is the object of this invention to provide a coating binder based on a vinyl polymer resin with improved properties regarding the shortcomings as mentioned supra. This object is achieved by an aqueous coating binder composition comprising a mass fraction of from 2 % to 30 % of a hydroxy-functional oil derivative **A** and from 70 % to 98 % of a water-dispersible vinyl polymer resin **B**, where the mass fractions relate to the sum of masses of the binder components **A** and **B.**

In this aqueous coating binder, the hydroxy-functional oil derivative **A** is preferably derived from an oil **A1** which is an ester of at least one fatty acid **A11** and at least one polyhydric alcohol **A12** having two or more hydroxyl groups per molecule, and has, on at least one of the polymethylene chains of one of the fatty acid moieties of the said oil **A1,** at least one chemically attached chain-pendant hydroxyalkyl group wherein the number of carbon atoms in the alkyl moiety within the said hydroxyalkyl group is at least two. It is further preferred to link the hydroxyalkyl group in the hydroxy-functional oil derivative A to the said polymethylene chain via an optionally substituted alkylene carbonamide or carbonimide group.

The mixtures making up the aqueous coating binder comprise a water-dispersible vinyl polymer resin **B** which is a polymer comprising repeating units derived from at least one ester **B1** of an olefinically unsaturated monocarboxylic acid **B11** and an aliphatic linear, branched or cyclic alcohol **B12** having from one to twenty carbon atoms, and repeating units of at least one olefinically unsaturated monocarboxylic acid **B11**. The glass transition temperature of the vinyl polymer resin is preferably from 0 °C to 100 °C, particularly preferably from 10 °C to 90 °C, and especially preferred, from 20 °C to 70 °C. Its acid number is preferably from 2 mg/g to 50 mg/g, particularly preferred from 5 mg/g to 25 mg/g, and especially preferred from 6 mg/g to 15 mg/g. The hydroxyl number of the said vinyl polymer resin is from 0 mg/g to 80 mg/g, especially preferred from 5 mg/g to 75 mg/g.

In another preferred embodiment, the water-dispersible vinyl polymer resin **B** comprises repeating units derived from at least one of vinyl aromatic monomers **B2** wherein a vinyl group is attached to an optionally substituted aromatic residue, and of aliphatic vinyl compounds **B3** selected from the group consisting of vinyl esters **B31** of vinyl alcohol and aliphatic linear, branched or cyclic carboxylic acids having from 2 to 20 carbon atoms, vinyl ketones **B32** having a vinyl group and an aliphatic hydrocarbon group which is linear, branched or cyclic and has from 1 to 20 carbon atoms, of vinyl ethers **B33** with aliphatic alcohols which are linear, branched or cyclic and have from 1 to 20 carbon atoms, of vinyl halogenides **B34** and of vinylidene dihalogenides **B35**.

It is also possible to use a water-dispersible vinyl polymer resin **B** which comprises both repeating units derived from at least one ester **B1** of an olefinically unsaturated monocarboxylic acid **B11** and an aliphatic linear, branched or cyclic alcohol **B12** having from one to twenty carbon atoms, and repeating units of at least one olefinically unsaturated monocarboxylic acid **B11,** and additionally, repeating units derived from at least one of vinyl aromatic monomers **B2** wherein a vinyl group is attached to an optionally substituted aromatic residue, and of aliphatic vinyl compounds **B3** selected from the group consisting of vinyl esters **B31** of vinyl alcohol and aliphatic linear, branched or cyclic carboxylic acids having from 2 to 20 carbon atoms, vinyl ketones **B32** having a vinyl group and an aliphatic hydrocarbon group which is linear, branched or cyclic and has from 1 to 20 carbon atoms, of vinyl ethers **B33** with aliphatic alcohols which are linear, branched or cyclic and have from 1 to 20 carbon atoms, of vinyl halogenides **B34** and of vinylidene dihalogenides **B35**.

A further object of the invention is a process for the production of the aqueous coating binder defined supra comprising polymerising a mixture of monomers comprising

- at least one ester **B1** of olefinically unsaturated monocarboxylic acids **B11** and aliphatic linear, branched or cyclic alcohols **B12** having from one to twenty carbon atoms, and
- at least one olefinically unsaturated monocarboxylic acid **B11**

in an emulsion polymerisation in the presence of water and of at least one emulsifier and of at least one radical initiator, and optionally, of at least one chain transfer agent, to form a water-dispersible vinyl polymer **B**, neutralising the resulting polymer emulsion by addition of a base, and adding thereto under stirring conditions a hydroxyfunctional oil derivative **A** in an amount such that the ratio of the mass of component **A** to the sum of the masses of both components **A** and **B**, each in undiluted form, is from 2 % to 30 %.

Still another object of the invention is the process as described supra for the preparation of a water-dispersible vinyl polymer **B** wherein the mixture of monomers comprises at least one of

- vinyl aromatic monomers **B2** wherein a vinyl group is attached to an optionally substituted aromatic residue, and
- aliphatic vinyl compounds **B3** selected from the group consisting of
- vinyl esters **B31** of vinyl alcohol and aliphatic linear, branched or cyclic carboxylic acids having from 2 to 20 carbon atoms,
- vinyl ketones **B32** having a vinyl group and an aliphatic hydrocarbon group which is linear, branched or cyclic and has from 1 to 20 carbon atoms,
- vinyl ethers **B33** with aliphatic alcohols which are linear, branched or cyclic and have from 1 to 20 carbon atoms,
- vinyl halogenides **B34,** and
- vinylidene dihalogenides **B35,**

optionally in combination with at least one of **B1** and **B11.**

Another object of the invention is a method of use of the aqueous coating binder composition of **A** and **B** as described herein to prepare a coating composition, comprising mixing a mass fraction of from 2 % to 30 % of a hydroxyfunctional oil derivative **A** to an aqueous emulsion of a water-dispersible vinyl polymer resin **B** to form a binder, wherein the mass of the solid resin of vinyl polymer **B** of that emulsion amounts to a mass fraction of from 70 % to 98 %, based on the sum of the masses of solids of the components **A** and **B,** and mixing the said binder with a pigment paste and additives to form the said coating composition.

Still another object of the invention is a method of use comprising applying the said coating composition to a substrate selected from the group consisting of wood, processed wood materials, paper, cardboard, metals, concrete, plaster, and textiles.

The hydroxy-functional oil derivative **A** is preferably derived from an oil **A1** which is an ester of at least one fatty acid **A11** preferably having from 6 to 24 carbon atoms and at least one polyhydric alcohol **A12** having two or more, preferably three hydroxyl groups per molecule. It is preferred to use an oil component **A1** which has, on the average, at least one olefinic unsaturation per molecule of oil, due to the presence of at least one fatty acid residue in the said oil which has at least one olefinic unsaturation. The oil derivative **A** has, on at least one of the polymethylene chains of one of the fatty acid moieties of the said oil **A1,** at least one chemically attached chain-pendant hydroxyalkyl group wherein the number of carbon atoms in the alkyl moiety within the said hydroxyalkyl group is at least two. If there are more than one olefinic unsaturations in the same fatty acid residue of the oil **A1,** it is preferred to have these in an isolated configuration, i. e. neither immediately adjacent, nor conjugated.

The hydroxy functional oil derivative **A** is made by reacting an oil **A1** having at least one olefinic unsaturation and a molar mass of from 400 g/mol to 6000 g/mol with an olefinically unsaturated cyclic acid anhydride **A2** to form an adduct bonded via carbon-carbon bonds which adduct is then reacted with a hydroxyamine **A3** having at least one primary amino group and at least one hydroxyl group whereby the acid anhydride groups are converted to acid amide or acid imide groups.

The oils **A1** are generally esters of glycerol with three fatty acid molecules which may be the same or different, within one oil molecule. It is preferred to use natural oils such as linseed oil, soy bean oil. These oils **A1** may also be partially saponified or partially transesterified, and have an iodine number preferably from 100 cg/g to 220 cg/g, and particularly preferred of from 120 cg/g to 210 cg/g. An oil is "partially saponified" if at least one hydroxyl group is present due to saponification. A "partially transesterified oil" is one which has hydroxyl groups due to transesterification of an oil with polyhydric alcohols having two or more hydroxyl groups.

The olefinically unsaturated acid anhydrides **A2** may preferably have from four to twenty carbon atoms, at least one olefinic unsaturation, and at least one carboxylic acid anhydride group per molecule. Particularly preferred are maleic acid anhydride, citraconic acid anhydride, itaconic acid anhydride, chlorendic acid anhydride, and tetrahydrophthalic acid anhydride.

The hydroxyalkylamine **A3** has preferably from 2 to 12 carbon atoms, and preferably has exactly one primary amino group and exactly one hydroxyl group. Among the preferred compounds are ethanolamine, 3-propanolamine, 3- and 4-aminobutanol-1, 6-aminohexanol-1, 4-hydroxy-cyclohexylamine, 1-amino-4(2-hydroxyethyl) piperazine, but also aromatic hydroxyamines if the coating is not exposed to sunlight or radiation.

It is preferred to link the hydroxyalkyl group in the hydroxy-functional oil derivative A to the said polymethylene chain via an optionally substituted alkylene carbonamide or carbonimide group. According to a preferred embodiment, this can be effected by grafting the oil with an olefinically unsaturated anhydride **A2** of a dicarboxylic acid, such as maleic acid anhydride, citraconic acid anhydride, itaconic acid anhydride, and tetrahydrophthalic acid anhydride. This anhydride-grafted oil is then reacted with a hydroxyalkylamine **A3** having at least one primary amino group and at least one hydroxyl group which groups are separated by preferably at least two successive carbon atoms. The anhydride ring is opened, and a so-called amide acid with a carbonamide structure is formed which is at least partly cyclised to form an imide ring, also called a carbonimide structure.

This hydroxy-functional oil derivative **A** can be mixed as such with the vinyl type resin **B**, it is, however, also possible and preferred to further react the hydroxy-functional oil derivative **A**, under at least partial consumption of its hydroxyl groups, with an acid-group-containing monomeric, oligomeric or polymeric compound **A4** under esterification conditions, or, in the alternative, in an addition reaction with an isocyanate group-containing monomeric or oligomeric compound **A5.**

Both further reactions lead to an enlargement of the molecule **A**, to form an ester or polyester **A-A4,** or to form a (poly)urethane **A-A5.**

Any isocyanate compound **A5** having at least two isocyanate groups, and which is aliphatic or aromatic, or monomeric or oligomeric, can be used. The reaction with a diisocyanate can result, in a simple way, in connecting two of the **A** molecules by reaction with the diisocyanates which yields a diurethane.

If the resulting aqueous coating binder is used for outdoor applications or where the substrate covered is exposed to sunlight or radiation, it is preferred to use aliphatic isocyanate. Useful isocyanates include hexamethylene diisocyanate, isophorone diisocyanate, tetramethylxylylene diisocyanate, bis-(4-isocyanatocyclohexyl) methane, but also toluylene diisocyanate and 4,4'-diisocyanatodiphenyl methane, as well as the allophanates, biurets, uretdiones and isocyanurates thereof.

Compounds **A4** which are useful in this context are dicarboxylic acids, such as adipic acid or terephthalic acid, carboxyl terminated polyesters such as polybutylene adipate, polyanhydrides such as the polyanhydride of dodecane dioic acid, acrylate copolymers having acid groups, in particular those of an acid number of at least 20 mg/g, and also particularly preferred, acid-grafted fatty acids **A41.**

Acid-grafted fatty acids **A41** which are particularly useful in the context of the present invention are synthesised from fatty acids **A411** having from 12 to 30 carbon atoms by grafting with olefinically unsaturated carboxylic acids **A412** which preferentially carry substituents on the carbon atom in alpha position to the carboxyl group, such as methacrylic acid, ethacrylic acid (2-methylene butanoic acid or 2-ethyl acrylic acid), 2-vinyl propionic acid and tiglinic acid (trans-2,3-dimethyl acrylic acid) onto the said fatty acids **A411.**

In the grafting step, in addition to the acids **A412,** other olefinically unsaturated monomers **A413** capable of radical copolymerisation may also be grafted onto the fatty acids **A411,** selected from the group consisting of olefinically unsaturated carboxylic acids which are not branched in the alpha position such as acrylic acid and vinylacetic acid, monoesters of aliphatic alcohols and olefinically unsaturated dicarboxylic acids such as monomethyl maleinate, esters of aliphatic alcohols and any of the olefinically unsaturated carboxylic acids mentioned supra such as methyl (meth) acrylate, ethyl (meth)acrylate, isobutyl (meth)acrylate, and 2-ethylhexyl-(meth)acrylate, as well as diesters of olefinically unsaturated dicarboxylic acids such as dimethyl maleinate, hydroxy functional esters of di- and polyhydric alcohols and any of the olefinically unsaturated carboxylic acids mentioned supra, such as hydroxyethyl (meth)acrylate and hydroxypropyl (meth)acrylate, and aromatic vinyl compounds such as styrene, p-methylstyrene and vinyl toluene, and other vinyl compounds such as vinyl acetate, vinyl chloride, and (meth)acrylonitrile.

The vinyl polymer resin **B** is preferably externally emulsified, due to the use of at least one emulsifier in the polymerisation reaction, preferably, a mixture of at last one non-ionic emulsifier and at least one ionic emulsifier is used.

The esters **B1** are preferably esters of an olefinically unsaturated monocaroboxylic acids **B11** having from three to twenty carbon atoms and at least one olefinic unsaturation, or of olefinically unsaturated dicarboxylic acids **B13** having from four to twenty carbon atoms and at least one olefinic unsaturation, and an aliphatic linear, branched or cyclic alcohol **B12** having from one to twenty carbon atoms. As acids **B11,** preferred are acrylic acid, methacrylic acid, ethacrylic acid, vinyl acetic acid, and also, olefinically unsaturated dicarboxylic acids **B13** such as maleic, fumaric, itaconic, citraconic, and mesaconic acids. Alcohols **B12** are preferably selected from the group consisting of methanol, ethanol, 1- and 2-propanol, n-, sec.-, tert,- and isobutanol, amyl alcohol, 1-hexanol, 2-ethylhexanol, decanol, and tridecanol. The esters **B1** are preferably methyl (meth)acrylate, ethyl (meth)acrylate, n-, iso- and tert.- butyl (meth)acrylate, 2-ethylhexyl (meth)acrylate, the analogous maleic acid mono- or diesters, and also hydroxyesters such as hydroxyethyl (meth) acrylate and hydroxypropyl (meth)acrylate.

Vinyl aromatic monomers **B2** are preferably styrene, p-methyl styrene, vinyl toluene (isomeric mixture), alpha-methyl styrene, chlorostyrene, and vinyl naphthalene.

Aliphatic vinyl compounds **B3** which may be used in the preparation of copolymers **B** are selected from the group consisting of vinyl esters **B31**, which are (formally) esters of vinyl alcohol with aliphatic acids having from two to twenty carbon atoms such as acetic, propionic, butyric, 2-ethylhexanoic, and 2,2-dimethyl octanoic acids, and other so-called ®Versatic acids which are branched saturated monocarboxylic acids having a tertiary carboxylic acid group, and which are made by the Koch reaction from olefins, carbon monoxide, and water, such as pivalic acid, 2,2-dimethyl butyric acid etc.; vinyl ketones **B32** having an aliphatic hydrocarbon group of 1 to 20 carbon atoms bonded to the ketone carbonyl carbon atom which aliphatic hydrocarbon group may be preferably saturated and linear, branched or cyclic, examples are vinyl methyl ketone and ethyl vinyl ketone; vinyl ethers **B33** which are preferably selected from the group consisting of methyl vinyl ether, ethyl vinyl ether, n- and iso-butyl vinyl ether, vinyl halogenides B34 such as vinyl chloride, acrylonitrile and methacrylonitrile, and vinylidene halogenides such as vinylidene chloride, vinylidene fluoride, and vinylidene cyanide.

These aqueous coating binder compositions can be used to prepare coating compositions, by mixing a mass fraction of from 2 % to 30 % of a hydroxy-functional oil derivative **A** to an aqueous emulsion of a water-dispersible vinyl polymer resin **B** to form a binder, wherein the mass of the solid resin of vinyl polymer **B** of that emulsion amounts to a mass fraction of from 70 % to 98 %, based on the sum of the masses of solids of the components **A** and **B**, to form a clear coat coating composition which optionally may comprise the usual additives such as defoamers and wetting agents, or, in the alternative, mixing this binder with a pigment paste and further additives to form a pigmented coating composition.

The coating composition thus prepared may be applied to any substrate, preferentially, wood, processed wood materials, paper, cardboard, metals, concrete, plaster, and textiles.

The following examples further illustrate the invention, without limitation. In these examples, as well as in the entire specification, all quantities with the unit "%" denote mass fractions (ratio of the mass of the component under consideration, and the total mass of the mixed phase or composition), if not explicitly mentioned otherwise. A concentration stated in "%" is also the mass fraction of the solute in the solution (= ratio of the mass of the solute and the mass of the solution).

The physical quantity formerly referred to as "limiting viscosity number", properly named "Staudinger-Index" $J_g$ according to DIN 1342, part 2.4, is the limiting value of the Staudinger function $J_v$ for decreasing concentration and shear gradient, wherein $J_v$ stands for the relative change in viscosity divided by the mass concentration

$$\beta_B = m_B / V$$

of the solute B (having a mass $m_B$ of the solute in a volume V of the solution), viz.,

$$J_v = (\eta_r - 1) / \beta_B .$$

The relative change in viscosity $\eta_r - 1$ is calculated as

$$\eta_r - 1 = (\eta - \eta_s) / \eta_s .$$

The relative viscosity $\eta_r$ is the ratio of the viscosity $\eta$ of the solution under consideration, and the viscosity $\eta_s$ of the pure solvent. The physical significance of the Staudinger index is that of a specific hydrodynamic volume of the solvated polymer coils at infinite dilution in the state of rest. The unit generally accepted for $J$ is "cm$^3$/g"; formerly often "dl/g".

The hydroxyl number is defined according to DIN EN ISO 4629 (DIN 53 240) as the ratio of the mass of potassium hydroxide $m_{KOH}$ having the same number of hydroxyl groups as the sample, and the mass $m_B$ of that sample (mass of solids in the sample for solutions or dispersions); the customary unit is "mg/g".

The acid number is defined, according to DIN EN ISO 3682 (DIN 53 402), as the ratio of that mass $m_{KOH}$ of potassium hydroxide which is needed to neutralise the sample under examination, and the mass $m_B$ of this sample, or the mass of the solids in the sample in the case of a solution or dispersion; its customary unit is "mg/g".

Example 1 Acrylic Dispersion

120 g of deionised water were mixed with an anionic emulsifier (®Rhodacal DS 10, 1.3 g, Rhodia Chemicals) and a nonionic emulsifier (®Disponil A 3065, 1.6 g, Cognis) and charged to a glass vessel. At a reaction temperature of 80 °C, a mixture of a radical initiator (ammonium peroxodisulphate, 0.15 g), and as surfactants, further 1.3 g of ®Rhodacal DS 10 and 1.6 g of ®Disponil A 3065, dissolved in 126.4 g of water, blended with a monomer mixture of 50 g of styrene, 130 g of n-butyl methacrylate, and 10 g of acrylic acid, was added within two hours. When the reaction was complete and no more heat evolved, a further 0.1 g of ammonium peroxodisulphate dissolved in 5 g of deionised water were added, and the mixture was stirred for a further sixty minutes. The reaction mixture was then cooled to 40 °C and neutralised by addition of 0.2 g of a 25 % strength ammonia solution in water. The resulting acrylic dispersion had a glass temperature of 44 °C, and an acid number of 19 mg/g. Its mass fraction of solids was set by addition of further deionised water to 42 %

Example 2 Acrylic Dispersion

120 g of deionised water were mixed with an emulsifier (®Dowfax 2A1, 2 g, The Dow Chemical Corp.) and charged to a glass vessel. At a reaction temperature of 85 °C, a radical initiator (ammonium peroxodisulphate, 0.2 g) was added. Then, a mixture of 130 g of deionised water, 2 g of the emulsifier ®Dowfax 2A1, 120 g of methyl methacrylate, 30 g of hydroxyethyl methacrylate, 30 g of n-butyl acrylate, and 2 g of acrylic acid was added within 150 minutes while keeping the temperature constant at 85 °C. When the reaction was complete and no more heat evolved, a further 0.1 g of ammonium peroxodisulphate dissolved in 5 g of deionised water were added, and the mixture was stirred for a further sixty minutes. The reaction mixture was then colled to 40 °C and neutralised by addition of 0.2 g of a 25 % strength ammonia solution in water. The resulting acrylic dispersion had a glass temperature of 61 °C, a hydroxyl number of 70 mg/g, and an acid number of 8.4 mg/g.

Example 3 Grafted Fatty Acid

71 g of soy bean oil fatty acid were charged into a reactor and heated to 140 °C. A mixture of 55 g of isobutyl methacrylate, 10 g of para-methyl styrene, and 35 g of methacrylic acid were added continuously over 7.5 hours, and simultaneously, 4 g of di-tert.-butyl peroxide were added. When the addition was complete, the reaction mixture was stirred further at 140 °C until a conversion of more than 95 % was reached, as judged from the determination of the mass fraction of solids. In a repeat experiment, the addition of further peroxide allowed acceleration of the reaction. Residual monomers were almost completely removed by applying a subatmospheric pressure of 100 hPa (100 mbar). After cooling, the reaction mixture was diluted with xylene to a mass fraction of solids of 85 %. The acid number was 200 mg/g.

Example 4 Oil - Maleic Anhydride Adduct

500 g of soybean oil and 100 g of maleic anhydride were charged into a reactor and the reactor was then repeatedly purged with inert gas to remove atmospheric oxygen. The mixture was heated to 140 °C under an inert gas blanket and the temperature was then increased to 210 °C in the course of two further hours. The reaction mixture was kept at this temperature for approximately three hours until the adduct formation was concluded. Free maleic anhydride could no longer be detected. A liquid resin having the following data was obtained:

| | |
|---|---|
| mass fraction of solids: | 99.1 % |
| Acid number: | 92.2 mg/g (determined as the half-ester) |
| Dynamic viscosity (23 °C, 25 s$^{-1}$): | 4,750 mPa·s |

Example 5 Formation of Hydroxy Functional Carbonimide

600 g of the resin from Example 4 and 165 g of xylene were charged into a reactor. 61 g of ethanolamine were added in the course of ten minutes under stirring, and the temperature rose to approximately 85 °C due to the exothermic reaction. After the exothermicity had subsided, the mixture was heated further to 160 °C, and the water formed during the reaction was removed by azeotropic distillation with the xylene, phase separation and recycling of the xylene. The mixture was kept at 160 °C for three further hours until an acid number of less than 10 mg/g was measured on a sample taken from the reaction mixture which indicated substantial completion of the formation (cyclisation) of carbonimide, with low remaining residues of carbonamide (the "amide acid"). The remaining xylene was removed by distillation under reduced pressure. A resin having the following data was obtained:

| | |
|---|---|
| mass fraction of solids: | 99.4 % |
| Acid number: | 7 mg/g |

Example 6 Condensation Product of the Hydroxy-Functional Carbonimide of Example 5 and the Grafted Fatty Acid of Example 3

643 g of the resin of Example 5 and 588 g of the grafted fatty acid of Example 3 were charged into a reactor and heated to 190 °C. Water formed during the esterification was removed by azeotropical distillation together with the xylene of the resin solution of Example 3; the xylene separated was recycled into the reaction mixture. Condensation was continued for approximately two hours until a Staudinger index of 7 $cm^3$/g was determined on a sample taken. Remaining xylene was subsequently removed by distillation under reduced pressure. A resin with the following data was obtained:

| | |
|---|---|
| mass fraction of solids: | 99.3 % |
| acid number: | 62.5 mg/g |
| Staudinger index: | 7.5 $cm^3$/g |

The reactor was then cooled and the contents were emulsified starting at a temperature of 95 °C by addition of aqueous ammonia solution (25 g of $NH_3$ in 100 g of the solution) and of 1,640 g of deionised water, under stirring. The following values were determined on the emulsion obtained:

| | |
|---|---|
| mass fraction of solids: | 42 % |
| acid number: | 68 mg/g |
| pH* | 8.15 |
| dynamic viscosity (23 °C, 10 $s^{-1}$): | 10 Pa·s |
| average particle size | 36.5 nm |
| * Measurement after dilution to a mass fraction of solids of 10 % in aqueous solution | |

Example 7 Application Test

The acrylic dispersion of Example 1 (Binder Mixture 7.1) and the further binder mixtures (7.2 to 7.3) modified with the dispersion of the oil adduct of example 6, by charging the acrylic dispersion, and mixing thereto, by adding over two hours under stirring at 35 °C, in quantities as detailed in table 1 infra were formulated into a white pigmented paints by first preparing a white pigment paste by milling 69.4 g of ®Kronos 2310 titanium dioxide pigment, 5.4 g of ®Tafigel PUR 80 (an associative polyurethane thickener from Münzing Chemie GmbH), 3.6 g of ®Additol VXW 6208 (a non-ionic dispersant, Cytec Surface Specialties Austria GmbH), 1.7 g of propylene glycol, 0.8 g of ®Additol VXW 6214 (a fluorine-modified substrate wetting and levelling agent, Cytec Surface Specialties Austria GmbH), and 1.9 g of ®Additol VXW 4973 (a mineral oil based defoamer, Cytec Surface Specialties Austria GmbH).

White paints were prepared by charging 66.75 g in each case of the coating binders of Table 1, adding 0.2 g of 25 % strength aqueous ammonia, and mixing this binder with 29.1 g of the white pigment paste (29.1 g in each case), and adding 0.3 g of ®Additol VXW 6386 (a paraffin based defoamer, Cytec Surface Specialties Austria GmbH), 0.75 g of ®Tafigel PUR 80 thickener, 0.2 g of ®Byk 346 (a polyether modified polydimethyl siloxane wetting agent, Byk Chemie), 2.58 g of propylene glycol, and 0.02 g of ®Tint Ayd WED 2018 (a blend of cyan and magenta pigments dispersed in a mixture of aqueous ammonia and propylene glycol, yellowness masking agent from Elementis Specialties, Inc.)

Table 1 Binder Compositions (masses in g)

| Binder Mixture | 7.1 | 7.2 | 7.3 |
|---|---|---|---|
| mass of dispersion of Ex. 1 in g | 220.5 | 220.5 | 203.7 |
| mass of dispersion of Ex. 6 in g | 0 | 19.5 | 35.1 |
| ®Benzoflex 50 mass in g | 8 | 2 | 1 |
| ®Benzoflex 50 is a benzoate ester plasticiser from Velsicol Chemical Corp. | | | |

The white paints prepared from Binder mixtures 7.2 and 7.3 showed marked advantage with respect to paintability which denotes the resistance experienced when applying a paint with a brush: in common alkyd resins, a marked resistance is experienced, while common acrylic resins do not show such resistance which indicates to a professional painter the right amount of paint on the brush and is needed to provide an even coating layer on the substrate by brushing. Gloss and levelling, especially with regard to the disappearance of brush marks, were also improved in comparison to the paint prepared from binder 7.1. A further advantage was realised in the increase of the open time, i. e. the time left until addition of further paint adjacent to the first paint layer still leads to a smooth and imperceptible transition between these two paint layers. Additionally, the paint formulations from binders 7.2 and 7.3 show better surface hardness and less dirt pick-up (soiling) after 6 months' outdoor exposure.

The same advantages have been found when adding the dispersion of Example 6, or other hydroxy-functional oil derivatives to vinyl polymer based paints such as those made from polyvinyl acetate or copolymers thereof with other vinyl esters such as ®Versatic acid vinyl ester, or copolymers of vinyl acetate with acrylic esters or with maleic acid dibutyl ester or with styrene.

**Claims**

1. An aqueous coating binder composition comprising a mass fraction of from 2 % to 30 % of a hydroxy-functional oil derivative **A** and from 70 % to 98 % of a water-dispersible vinyl polymer resin **B**, where the mass fractions relate to the sum of masses of the binder components **A** and **B**.

2. The aqueous coating binder of claim 1 wherein the hydroxy-functional oil derivative **A** is derived from an oil **A1** which is an ester of at least one fatty acid **A11** and at least one polyhydric alcohol **A12** having two or more hydroxyl groups per molecule, and has, on at least one of the polymethylene chains of one of the fatty acid moieties of the said oil, at least one chemically attached chain-pendant hydroxyalkyl group wherein the number of carbon atoms in the alkyl moiety within the said hydroxyalkyl group is at least two.

3. The aqueous coating binder of claim 2 wherein the hydroxyalkyl group the hydroxy-functional oil derivative **A** is attached to the said polymethylene chain via an optionally substituted alkylene carbonamide or carbonimide group.

4. The aqueous coating binder of any of claims 1 to 3 wherein at least a part of the hydroxyl groups is reacted by an esterification reaction with an acid-group-containing monomeric, oligomeric or polymeric compound **A4.**

5. The aqueous coating binder of any of claims 1 to 3 wherein at least a part of the hydroxyl groups is reacted in an addition reaction with an isocyanategroup-containing monomeric or oligomeric compound **A5.**

6. The aqueous coating binder of claim 1 wherein the water-dispersible vinyl polymer resin **B** is a polymer comprising repeating units derived from at least one ester **B1** of olefinically unsaturated monocarboxylic acids **B11** and aliphatic linear, branched or cyclic alcohols **B12** having from one to twenty carbon atoms, and repeating units of at least one olefinically unsaturated monocarboxylic acid **B11.**

7. The aqueous coating binder of claim 1 wherein the water-dispersible vinyl polymer resin B has a glass transition temperature of from 0 °C to 100 °C, and an acid number of from 2 mg/g to 20 mg/g.

8. The aqueous coating binder of claim 1 wherein the water-dispersible vinyl polymer resin **B** is externally emulsified.

9. The aqueous coating binder of claim 1 wherein the water-dispersible vinyl polymer resin B comprises repeating units derived from at least one of vinyl aromatic monomers **B2** wherein a vinyl group is attached to an optionally substituted aromatic residue, and of aliphatic vinyl compounds **B3** selected from the group consisting of vinyl esters **B31** of vinyl alcohol and aliphatic linear, branched or cyclic carboxylic acids having from 2 to 20 carbon atoms, unsaturated ketones **B32** having a vinyl group and an aliphatic hydrocarbon group which is linear, branched or cyclic and has from 1 to 20 carbon atoms, of vinyl ethers **B33** with aliphatic alcohols which are linear, branched or cyclic and have from 1 to 20 carbon atoms, of vinyl halogenides **B34** and of vinylidene dihalogenides **B35**.

10. The aqueous coating binder of claim 6 wherein the water-dispersible vinyl polymer resin **B** additionally comprises repeating units derived from at least one of vinyl aromatic monomers **B2** wherein a vinyl group is attached to an optionally substituted aromatic residue, and of aliphatic vinyl compounds **B3** selected from the group consisting of vinyl esters **B31** of vinyl alcohol and aliphatic linear, branched or cyclic carboxylic acids having from 2 to 20 carbon atoms, unsaturated ketones **B32** having a vinyl group and an aliphatic hydrocarbon group which is linear, branched or cyclic and has from 1 to 20 carbon atoms, of vinyl ethers **B33** with aliphatic alcohols which are linear, branched or cyclic and have from 1 to 20 carbon atoms, of vinyl halogenides **B34** and of vinylidene dihalogenides **B35**.

11. A process for the production of the aqueous coating binder of claim 1 comprising polymerising a mixture of monomers comprising

- at least one ester **B1** of olefinically unsaturated monocarboxylic acids **B11** and aliphatic linear, branched or cyclic alcohols **B12** having from one to twenty carbon atoms, and
- at least one olefinically unsaturated monocarboxylic acid **B11**

in an emulsion polymerisation in the presence of water and of at least one emulsifier and of at least one radical initiator, and optionally, of at least one chain transfer agent, neutralising the resulting polymer emulsion by addition of a base, and adding thereto under stirring conditions a hydroxyfunctional oil derivative **A** in an amount such that the ratio of the mass of component **A** to the sum of the masses of both components **A** and **B**, each in undiluted form, is from 2 % to 30 %.

12. The process of claim 11 wherein the mixture of monomers additionally comprises at least one of

- vinyl aromatic monomers **B2** wherein a vinyl group is attached to an optionally substituted aromatic residue, and
- aliphatic vinyl compounds **B3** selected from the group consisting of
- vinyl esters **B31** of vinyl alcohol and aliphatic linear, branched or cyclic carboxylic acids having from 2 to 20 carbon atoms,
- unsaturated ketones **B32** having a vinyl group and an aliphatic hydrocarbon group which is linear, branched or cyclic and has from 1 to 20 carbon atoms,
- vinyl ethers **B33** with aliphatic alcohols which are linear, branched or cyclic and have from 1 to 20 carbon atoms,
- vinyl halogenides **B34,** and
- vinylidene dihalogenides **B35**.

13. The process of claim 11 wherein, in a separate reaction, the hydroxy functional oil derivative **A** is made by reacting an oil **A1** having at least one olefinic unsaturation and a molar mass of from 400 g/mol to 6000 g/mol with an olefinically unsaturated cyclic acid anhydride **A2** to form an adduct bonded via carbon-carbon bonds which adduct is then reacted with a hydroxyamine **A3** having at least one primary amino groups and at least one hydroxyl group whereby the acid anhydride groups are converted to acid amide or acid imide groups.

14. A method of use of the aqueous coating binder composition of claim 1 to prepare a coating composition, comprising mixing a mass fraction of from 2 % to 30 % of a hydroxy-functional oil derivative **A** to an aqueous emulsion of a water-dispersible vinyl polymer resin **B** to form a binder, wherein the mass of the solid resin of vinyl polymer **B** of that emulsion amounts to a mass fraction of from 70 % to 98 %, based on the sum of the masses of solids of the components **A** and **B**, and mixing the said binder with a pigment paste and additives to form the said coating composition.

15. The method of use of claim 14, comprising applying the said coating composition to a substrate selected from the group consisting of wood, processed wood materials, paper, cardboard, metals, concrete, plaster, and textiles.

European Patent
Office

**EUROPEAN SEARCH REPORT**

Application Number

EP 07 01 1688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/069759 A (SURFACE SPECIALTIES AUSTRIA GM [AT]; JEDLICKA RUDOLF [AT]; BURKL JULIU) 19 August 2004 (2004-08-19) * page 5, paragraph 3; claims 1-11 * | 1,6,11, 14 | INV. C09D201/06 C09D191/00 |
| X | US 4 108 811 A (ECKHOFF PAUL SHEPPARD) 22 August 1978 (1978-08-22) | 1,6-12, 14,15 | |
| Y | * claims 1-28; examples 5-9 * | 1-15 | |
| Y | WO 2005/012370 A (SURFACE SPECIALTIES AUSTRIA GM [AT]; REIDLINGER GERHARD [AT]; BILLIANI) 10 February 2005 (2005-02-10) * claims 1-10; examples 1-6 * | 1-15 | |

TECHNICAL FIELDS
SEARCHED (IPC)

C09D
C08F
C08L
C09K
C08G

The present search report has been drawn up for all claims

| Place of search | Date of completion of the search | Examiner |
|---|---|---|
| Munich | 8 October 2007 | Knutzen-Mies, Karen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 07 01 1688

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2007

| Patent document cited in search report | | Publication date | Patent family member(s) | | Publication date |
|---|---|---|---|---|---|
| WO 2004069759 | A | 19-08-2004 | BR | PI0407297 A | 07-02-2006 |
| | | | CA | 2513832 A1 | 19-08-2004 |
| | | | CN | 1747906 A | 15-03-2006 |
| | | | EP | 1594811 A1 | 16-11-2005 |
| | | | JP | 2006520406 T | 07-09-2006 |
| | | | KR | 20050101545 A | 24-10-2005 |
| | | | US | 2006135649 A1 | 22-06-2006 |
| | | | ZA | 200506279 A | 31-05-2006 |
| US 4108811 | A | 22-08-1978 | GB | 1530186 A | 25-10-1978 |
| | | | US | 3919145 A | 11-11-1975 |
| WO 2005012370 | A | 10-02-2005 | AT | 412971 B | 26-09-2005 |
| | | | AT | 11602003 A | 15-02-2005 |
| | | | CA | 2532897 A1 | 10-02-2005 |
| | | | EP | 1654293 A1 | 10-05-2006 |
| | | | US | 2006194922 A1 | 31-08-2006 |

EPO FORM P0459

For more details about this annex : see Official Journal of the European Patent Office, No. 12/82